# EUROPEAN PATENT APPLICATION

(11) **EP 1 702 721 A1**
(43) Date of publication of application: **20.09.2006**
(21) Application number: 06004907.9
(22) Date of filing: 10.03.2006
(51) Int. Cl.: B25B 5/12, B23B 31/18, B25B 5/08

(54) **Clamping and centering device for work pieces, having a hook-shaped clamping member**

(30) Priority: 17.03.2005 IT mi20050436
(71) Applicant: UNIVER S.p.A., I-20128 Milano (IT)
(72) Inventor: Migliori, Luciano, 20124 Milan (IT)
(74) Representative: Coloberti, Luigi

(57) **Abstract**

The clamping and centering device (10) for work pieces comprises a box-shaped body (11), a hollow centering pin (12) and at least one movable clamping member (13,14) having a fore hook-shaped portion (13',14') and a rear shank (13'',14''). The device (10) also comprises guide means for guiding the clamping member (13,14) which are provided with a first and a second cam member (19,20) in the aforesaid rear shank (13",14"), and a first and a second guide pin (21,22) extending into the cam members (19,20), the guide pins (21, 22) being secured to a support element (16) for supporting the centering pin (12) and the clamping member (13,14); the cam members (19, 20) are shaped and arranged to provide the clamping member (13,14) with successive and correlated translation movements in a slanted direction and in a cross direction with respect to the longitudinal axis of the aforesaid box-shaped body (11). The support element (16), the centering pin (12), and the clamping member (13, 14) are arranged in the form of a single unit removably secured to the box-shaped body (11) of the device (10).

## Description

### BACKGROUND OF THE INVENTION

This invention concerns a clamping and centering device for work pieces, having at least one hook-shaped clamping member, used in particular for gripping and centering metal sheets along a motor vehicle body assembly line.

### STATE OF THE ART

In general, in the automotive field, use is made of clamping and centering devices for work pieces, having at least one hook-shaped clamping member protruding from a hollow centering pin, to grip metal sheets through appropriate holes or along edges of the same sheets, in such a way as to allow the sheets to be joined or welded together to form the body of a motor vehicle.

A clamping and centering device of this kind, for example known from EP-A-1 123 779, in general comprises a box-shaped body having a hollow centering pin, through which extends at least one clamping member movable between a forward releasing position inside the centering pin and a backward position, in which it retains a work piece, outside of the same pin; the clamping member is provided with a hook-shaped portion at a fore end, which, in correspondence with the aforesaid backward retaining position, protrudes from the centering pin through an appropriate side slit in the latter, and a rear shank which is provided with a shaped slot within which a guide pin slides for guiding the movement of the clamping member, the guide pin being connected to the box-shaped body of the device.

The device also comprises a linear actuator having a movable rod connected to the shank of the clamping member by means of a hinge pin, in such a way as to transmit to the same clamping member a movement in a longitudinal direction with respect to the box-shaped body, and to allow at the same time an oscillation of the aforesaid clamping member with respect to the rod of the actuator, the overall movement of the clamping member being guided by the sliding of the guide pin inside the shaped slot in the shank of the same clamping member.

A device of this kind however has several functional drawbacks; in particular, because of the direct connection between the rod of the actuator and the clamping member, it is not possible to exert high clamping forces, unless use is made of a particularly powerful linear actuator, with considerably high costs and overall dimensions.

Moreover, a clamping device of this kind does not guarantee an irreversible clamping of the work pieces in the event of operative failing of the linear actuator, for example due to a breakdown or malfunctioning, or in the event of external forces being exerted on the work pieces, with consequent problems related to the working safety of the device.

A further drawback relates to the guiding means for the movement of the clamping member, in particular the shaped slot in the shank of the clamping member and the guide pin connected to the box-shaped body, in that the sliding of the guide pin along the same shaped slot generates frictional forces which limit the precision in controlling the movement of the clamping member and, with the prolonged use in time, it give rise to the deterioration of the same guide means

Moreover, when the clamping member must be replaced, due to production or functional requirements, it is necessary to completely disassemble the clamping and centering device, with consequent prolonged machine down times, incompatible with the production requirements of assembly lines.

A still further drawback concerns the fact that dust and dirt can penetrate to the inside of the device through the slit in the centering pin, and over time cause malfunctioning of the same device, due to friction and wear that are created.

In order to solve this latter drawback EP-A-1 391 266 proposed a clamping and centering device of the aforementioned kind, comprising appropriate closing means for closing the slit formed in the centering pin, in order to prevent the dirt from penetrating to the inside of the device.

In particular, these closing means consist in a sliding closing element which is urged against a side surface of the clamping member, and in a flexible metal sheet closing element which extends between the centering pin and the hook-shaped portion of the clamping member.

Closing means of these kind however in turn have several drawbacks; in particular, the sliding closing element is subjected to considerable friction which, with the prolonged use in time, could jeopardise its regular functioning, while the flexible metal sheet closing element is subjected to fatigue failure since it undergoes considerable and repeated deformation, with the consequent need for its frequent replacement.

### OBJECTS OF THE INVENTION

The main object of this invention is to provide a clamping and centering device for work pieces, having at least one hook-shaped clamping member, which is structurally simple and which enables high clamping forces to be exerted using actuators of limited power, and which guarantees an irreversible clamping of the work pieces in the event of operative failing of the control actuator, or in the event of action of external forces which tend to make the work pieces to be released.

A further object of this invention is to provide a clamping and centering device of the aforementioned kind, which allows a more precise control over the movement of the clamping member, limiting the frictional forces between the guiding means for the same clamping member, and at the same time reducing the wear phenomena related thereto.

A further object of this invention is to provide a clamping and centering device of the aforementioned kind, which allow a quick and easy replacement of the clamping member and of the centering pin, thereby reducing machine down times.

A still further object of this invention is to provide a clamping and centering device of the aforementioned kind, which has efficient and durable closing means for the side slit in the centering pin from which the clamping member protrudes, that guarantee a perfect seal against infiltration of dust and dirt inside the same device.

### BRIEF DESCRIPTION OF THE INVENTION

The foregoing can be achieved by means of a clamping and centering device for work pieces of the type comprising:
- a box-shaped body having a longitudinal axis;
- a hollow centering pin, axially extending from the box-shaped body;
- at least one clamping member, movable between a forward releasing position inside the centering pin and a backward position outside of the aforesaid pin, for clamping a work piece against a shoulder surface, said clamping member having a hook-shaped portion at a fore end, and a rear shank; and
- guide means and actuating means operatively connected to the clamping member;
characterised in that a support element is provided for supporting said centering pin and said clamping member,
in that the guide means comprise first and second cam members in the rear shank of the clamping member, and first and second guide pins secured to the support element, said guide pins extending into said cam members for guiding the clamping member, the first and second cam members being shaped and arranged to provide the clamping member with successive and correlated translation movements in an angularly slanted direction and in a cross direction with respect to the longitudinal axis of the box-shaped body, and
in that the support element, the centering pin, and the at least one clamping member are arranged in the form of a single unit removably secured to the box-shaped body of the device.

### BRIEF DESCRIPTION OF THE DRAWINGS

These and further features according to this invention, will be more clearly evident from the following description with reference to the accompanying drawings, in which:

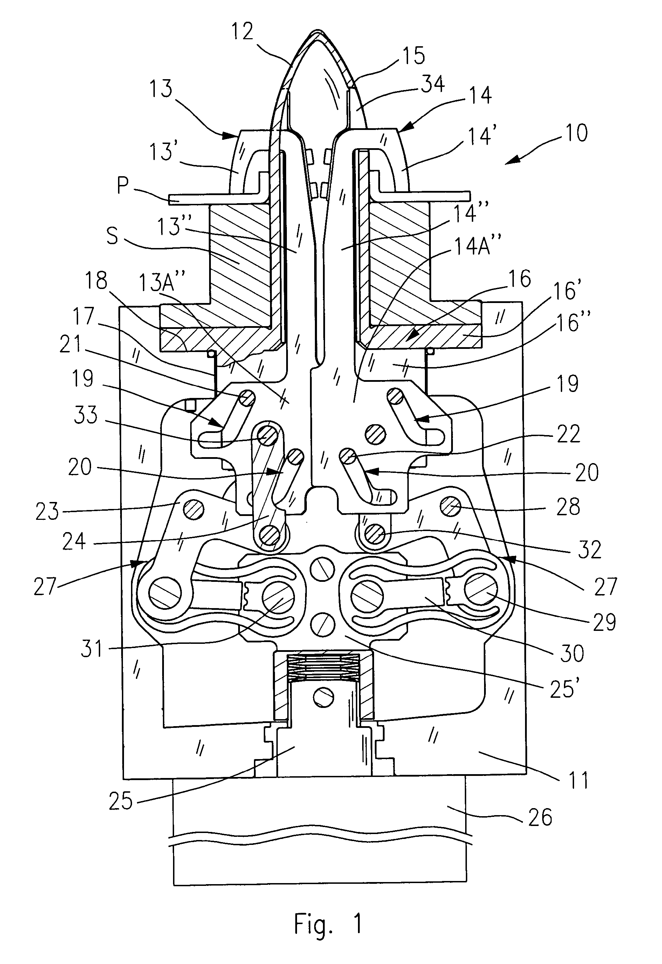

Fig. 1 shows a front cutaway view of a clamping and centering device for work pieces according to this invention, with the clamping members in a backward position for retaining a work piece;

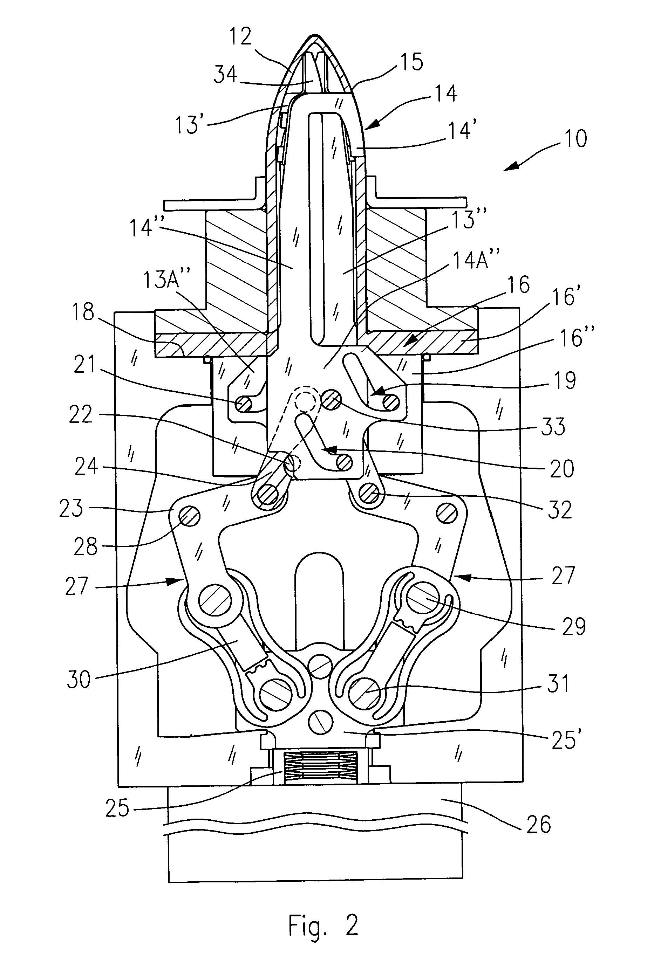

Fig. 2 shows a front cutaway view of the clamping and centering device of Fig. 1, with the clamping members in a forward position in which they release the work pieces;

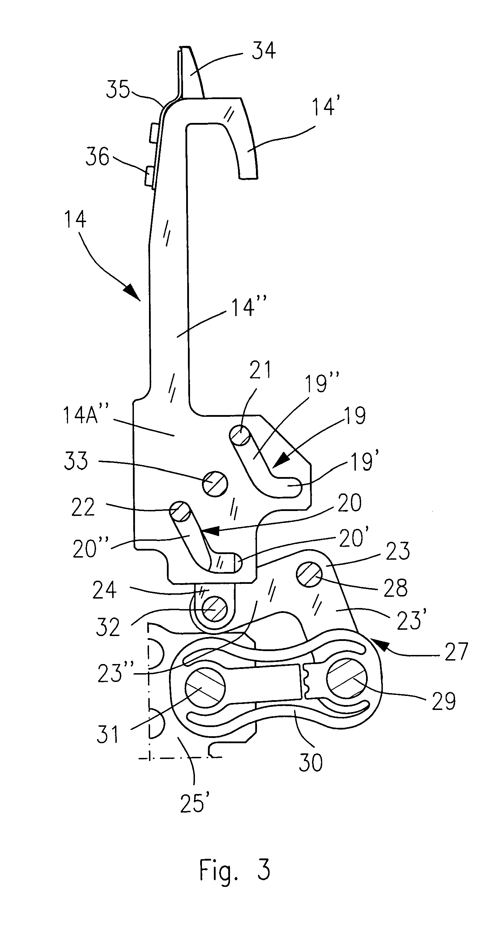

Fig. 3 shows an enlarged detail of the device of Fig. 1, illustrating a clamping member and the relevant guide and actuating means;
Fig. 4 shows an enlarged detail of Fig. 1;
Fig. 5 shows an enlarged detail of Fig. 2.

### DETAILED DESCRIPTION OF THE INVENTION

The general features of this invention will be illustrated hereunder by means of an embodiment.

Figures from 1 to 4 illustrate a clamping and centering device for work pieces according to this invention, indicated as a whole by the reference number 10, which comprises a box-shaped body 11, having a longitudinal axis, and a hollow centering pin 12, axially extending from a fore end of the same box-shaped body 11.

The device 10 also comprises at least one clamping member, in particular, in the case shown in the figures, a first and a second clamping member 13 and 14 symmetrically disposed with respect to the longitudinal axis of the box-shaped 11 of the device 10, which are movable between a forward releasing position inside the centering pin 12, and a backward position outside of the aforesaid pin 12 for clamping a work piece P against a shoulder surface; each clamping member 13, 14 in turn comprises a hook-shaped portion 13', 14' at a fore end, which, in correspondence with the aforesaid clamping position, protrudes from the centering pin 12 through a respective side slit 15 in the same centering pin 12, and a rear shank 13", 14'' which extends through the centering pin 12 and the box-shaped body 11.

The device 10 also comprises a support element 16 for supporting the centering pin 12 and the clamping members 13, 14, as well as comprises guide means for guiding the movement of the clamping members 13, 14, and actuating means operatively connected to the same clamping members 13, 14.

An additional member S defining a shoulder surface for the work pieces P, can also be provided at a fore end of the support element 16; in this way, the additional member S can be chosen and substituted according to operative requirements and to the shape of the work pieces P, in order to provide the most appropriate shoulder surface for the clamping of the same work pieces P.

In particular, the support element 16 for supporting the clamping members 13, 14 is removably positioned and secured in an appropriate housing at the fore end of the box-shaped body 11, through an insertion opening 17 provided in the same box-shaped body 11; moreover, in correspondence with the opening 17 for insertion of the support element 16, the box-shaped body 11 is provided with a resting surface 18, designed to contact with an appropriate flange or peripheral protrusion 16' of the support element 16, in such a way as to ensure its correct positioning.

Preferentially, the support element 16 is integrally made with the hollow centering pin 12, and comprises a first and a second side wall 16" , of which only one is illustrated in the figures, spaced apart from each other and parallel to the longitudinal axis of the box-shaped body 11, which fit into the opening 17 in the box-shaped body 11.

The guide means for guiding the clamping members 13, 14 comprise, for each clamping member 13, 14, a first and a second cam member 19, 20 in the rear shank 13'', 14'', and a first and a second guide pin 21, 22 secured to the support element 16, in particular to the side walls 16"; the guide pins 21, 22 extend into the cam members 19, 20 which are preferentially in the form of shaped slots, for guiding the clamping member 13, 14.

Each cam member 19, 20 is shaped and arranged to provide the clamping member 13, 14 with successive and correlated translation movements in an angularly slanted direction and in a cross direction with respect to the longitudinal axis of the same box-shaped body 11.

Preferentially, the guide pins 21, 22 are provided with bearings or other suitable means, in order to reduce the friction and, consequently, the wear which are generated during the sliding of the aforesaid pins 21, 22 in the cam members 19, 20.

The support element 16, the centering pin 12, and the clamping members 13, 14 are arranged in the form of a single unit removably secured to the box-shaped body 11 of the device 10, in such a way as to allow a quick and easy replacement of the clamping members 13, 14 or of the centering pin 12, according to operative requirements, for example in order to make use of clamping members 13, 14 provided with cam members 19, 20 shaped to provide the aforesaid members 13, 14 with a particular desired movement, or having a differently conformed hook-shaped portion 13', 14'.

Each clamping member 13, 14 comprises respective actuating means, correspondingly and symmetrically disposed with respect to the longitudinal axis of the box-shaped body 11 of the device 10.

In particular, the actuating means comprise, for each clamping member 13, 14, a drive member 23, tiltably supported by the box-shaped body 11, which is operatively connected in a releasable way to the shank 13" , 14" of the corresponding clamping member 13, 14 by a respective intermediate connecting link 24, as well as connected to a movable rod 25 of a linear actuator 26 by a respective toggle-lever mechanism 27.

Preferentially, each drive member 23 consists of an L-shaped lever, supported by a pivotal axis 28 arranged in an intermediate point of the same lever 23, the pivotal axis 28 being connected to the box-shaped body 11 of the device 10.

The L-shaped lever 23 has a first arm 23' oriented in the opposite direction to the centering pin 12, which is connected by means of a hinge axis 29 to a connecting link 30, preferentially of a type having a controlled elastic yielding in an axial direction; in turn the connecting link 30 is connected by a hinge axis 31 to a side of a fork-shaped end portion 25' of the rod 25 of the control actuator 26.

The arm 23' of the L-shaped lever 23 and the elastically yielding connecting link 30 form the aforesaid toggle-lever mechanism 27, which enables the clamping member 13, 14 to maintain the work pieces gripped in an irreversible condition of the movement, even in absence of power supply to the control actuator 26 or in presence of external forces tending to raise the same clamping member 13, 14.

Each L-shaped lever 23 also comprises a second arm 23", oriented towards the longitudinal axis of the box-shaped body 11, which is hingedly connected with the aforesaid intermediate connecting link 24 by means of an axis 32; in turn the intermediate connecting link 24 is releasably connected to the shank 13", 14" of a respective clamping member 13, 14 by means of an hinge pin 33 which can be removed through an appropriate opening in the box-shaped body 11, not shown, in correspondence for example with the releasing position of the clamping members 13, 14.

In this way, the unit composed of the supporting element 16, the clamping members 13, 14 and the centering pin 12, can be easily removed to enable the replacement of the clamping members 13, 14 and/or of the centering pin 12.

Each of the cam members 19, 20 for guiding the clamping members 13, 14 comprises a first rectilinear cam section 19', 20' in a cross direction with respect to the longitudinal axis of the box-shaped body 11, and a second cam section 19" , 20" slanted with respect to the axis of the box-shaped body 11, said cam sections being continuously radiused to each other.

Preferentially, the first rectilinear cam section 19', 20' is orthogonal to the axis of the box-shaped body 11.

Such a configuration of the cam members 19, 20 enables the hook-shaped portions 13', 14' of the clamping members 13, 14 to penetrate and to come out from the respective side slits 15 in the centering pin 12 with a movement orthogonal to the axis of the box-shaped body 11.

Consequently, by suitably shaping the hook-shaped portion 13', 14' of each clamping member 13, 14, it is possible to tightly close the side slits 15 in the centering pin 12 by the same hook-shaped portion 13', 14', in correspondence with the releasing position of the clamping members 13, 14, in such a way as to prevent the infiltration of dirt into the device 10.

Moreover, by appropriately shaping the slanted section 19'', 20'' of the cam members 19, 20, and by providing cam sections 19', 19'', 20', 20" having suitable length dimensions, it is possible to lower the clamping members 13, 14 in different position on the work piece, chosen in relation to the operative requirements.

Preferentially, the rear shank 13", 14'' of the clamping members 13, 14 comprises a plate-shaped element 13A'', 14A'' in which the first and the second cam members 19, 20 for guiding each clamping member 13, 14 are made.

Preferentially, the first and the second cam members 19, 20 are similarly shaped, and arranged spaced apart and parallel to each other in the plate-shaped element 13A", 14A" of each clamping member 13, 14, in order to precisely guide the movement of the clamping members 13, 14, without undesired tilting.

In order to prevent infiltration of dirt inside the device 10 through the side slits 15 in the centering pin 12, closing means are also provided to close them in correspondence with the clamping position, and between the clamping position and the releasing position of the clamping members 13, 14.

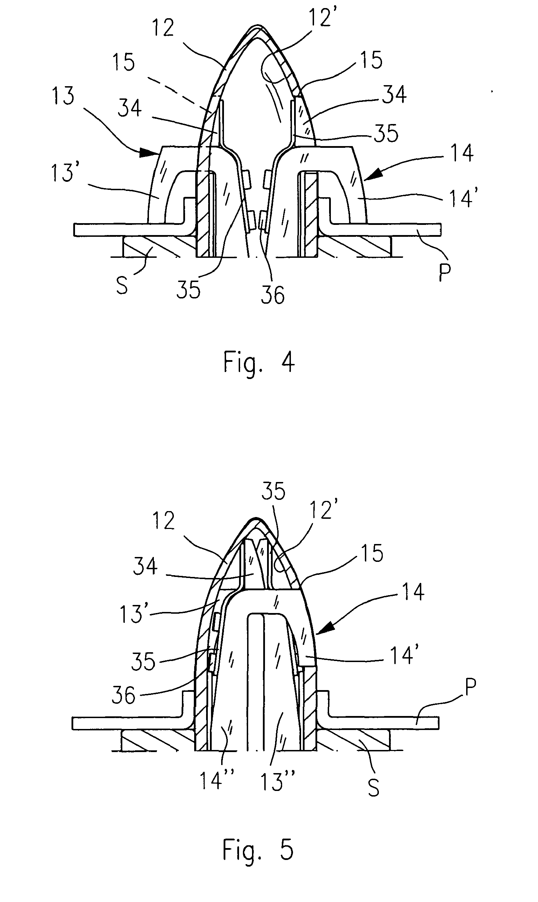

Said closing means, as clearly illustrated in figures 4 and 5, preferentially comprise a closing element 34 connected at a fore end of the hook-shaped portion 13', 14" of each clamping member 13, 14 by a flexible metal sheet 35 secured to the same clamping member 13, 14 by suitable screws 36; in this way, each closing element 34, during the movement of the clamping members 13, 14, is elastically urged against a sealing surface 12' inside the centering pin 12, thereby preventing dirt from infiltrating into the same pin 12.

A clamping and centering device according to the invention allows to exert high clamping forces while using actuators of limited power, due to a multiplication effect of the closing forces performed by the toggle-lever mechanism of the device.

Moreover, the closing means for the side slits 15 in the centering pin 12, are so durable and resistant as to ensure a perfect seal against the infiltration of dust and dirt inside the same device 10.

What has been described and shown with reference to the accompanying drawings, has been given purely by way of example in order to illustrate the general features of the invention, and one of its preferential embodiments; consequently, other modifications and variations to the clamping and centering device are possible, without thereby deviating from the object of the claims.

## Claims

1. Clamping and centering device (10) for work pieces (P) of the type comprising:
- a box-shaped body (11) having a longitudinal axis;
- a hollow centering pin (12), axially extending from the box-shaped body (11);
- at least one clamping member (13, 14), movable between a forward releasing position inside the centering pin (12) and a backward position outside of the aforesaid pin (12) for clamping a work piece (P) against a shoulder surface, said clamping member (13, 14) having a hook-shaped portion (13', 14') at a fore end, and a rear shank (13'', 14"); and
- guide means and actuating means operatively connected to the clamping member (13, 14);
**characterised in that** a support element (16) is provided for supporting said centering pin (12) and said clamping member (13, 14),
**in that** the guide means comprise first and second cam members (19, 20) in the rear shank (13'', 14") of the clamping member (13, 14), and first and second guide pins (21, 22) secured to the support element (16), said guide pins (21, 22) extending into said cam members (19, 20) for guiding the clamping member (13, 14), the first and second cam members (19, 20) being shaped and arranged to provide the clamping member (13, 14) with successive and correlated translation movements in an angularly slanted direction and in a cross direction with respect to the longitudinal axis of the box-shaped body (11), and
**in that** the support element (16), the centering pin (12), and the at least one clamping member (13, 14) are arranged in the form of a single unit removably secured to the box-shaped body (11) of the device (10).

2. Clamping and centering device (10) according to claim 1, **characterised in that** said actuating means comprise a drive member (23) tiltably supported by the box-shaped body (11), said drive member (23) being operatively connected in a releasable way to the shank (13", 14'') of the clamping member (13, 14) by an intermediate connecting link (24), and to a linear control actuator (26) by a toggle-lever mechanism (27).

3. Clamping and centering device (10) according to claim 2, **characterised in that** said drive member (23) consists of an L-shaped lever (23) pivotally supported at an intermediate point (28) by the box-shaped body (11) of the device (10).

4. Clamping and centering device (10) according to claim 1, **characterised in that** each of said first and second cam members (19, 20) for guiding the clamping member (13, 14) comprises a first rectilinear cam section (19', 20') in a cross direction with respect to the longitudinal axis of the box-shaped body (11), and a second cam section (19", 20'') slanted with respect to the axis of the box-shaped body (11), said first and second cam sections (19', 20', 19" , 20'') being continuously radiused to each other.

5. Clamping and centering device (10) according to claim 4, **characterised in that** said first rectilinear cam section (19', 20') is orthogonal to the longitudinal axis of the box-shaped body (11).

6. Clamping and centering device (10) according to claim 1, **characterised in that** the rear shank (13'', 14") of the clamping member (13, 14) comprises a plate-shaped element (13A", 14A") in which said first and second cam members (19, 20) are made for guiding the clamping member (13, 14).

7. Clamping and centering device (10) according to claim 6, **characterised in that** said first and second cam members (19, 20) are similarly shaped, and arranged spaced apart and parallel with each other in said plate-shaped element (13A", 14A") of the clamping member (13, 14).

8. Clamping and centering device (10) according to claim 1, **characterised in that** the box-shaped body (11) of the device (10) has at a fore end an insertion opening (17) for the insertion of said support element (16) for supporting the clamping member (13, 14), and a resting surface (18) for the support element (16), in correspondence with said opening (17) for the insertion of the support element (16).

9. Clamping and centering device (10) according to claim 1, **characterised in that** said support element (16) for supporting the clamping member (13, 14) is integrally made with said hollow centering pin (12).

10. Clamping and centering device (10) according to claim 1, in which said hollow centering pin (12) has a side slit (15) for the passage of the fore hook-shaped portion (13', 14') of said clamping member (13, 14), **characterised in that** the hook-shaped portion (13', 14') of the clamping member (13, 14) is shaped and disposed in such a way as to tightly close the side slit (15) in the centering pin (12) in correspondence with said releasing position for the clamping member (13, 14) inside the same centering pin (12).

11. Clamping and centering device (10) according to claim 10, **characterised by** comprising closing means for closing the side slit (15) in the centering pin (12) in correspondence with said backward clamping position for the clamping member (13, 14), and between said clamping position and said releasing position of the clamping member (13, 14).

12. Clamping and centering device (10) according to claim 11, **characterised in that** said closing means for the side slit (15) comprise a closing element (34) elastically urged against a sealing surface (12') inside the centering pin (12), said closing element (34) extending at a fore end of said hook-shaped portion (13', 14') of the clamping member (13, 14).

13. Clamping and centering device (10) according to claim 2, **characterised in that** said toggle-lever mechanism (27) of the actuating means comprises a connecting link (30) having a controlled elastic yielding in an axial direction.

14. Clamping and centering device (10) according to claim 1, **characterised by** comprising a first and a second clamping member (13, 14) connected to said support element (16), each clamping member (13, 14) comprising respective sliding guide means (19, 20, 21, 22), and respective actuating means, and
in that said first and second clamping member (13, 14) and the corresponding actuating means are disposed symmetrically with respect to the longitudinal axis of the box-shaped body (11) of the device (10).
